(19) Europäisches Patentamt
European Patent Office
Office européen des brevets

(11) **EP 2 133 523 A1**

(12) **DEMANDE DE BREVET EUROPEEN**

(43) Date de publication:
**16.12.2009 Bulletin 2009/51**

(51) Int Cl.:
**F01N 3/02** *(2006.01)*     **F01N 11/00** *(2006.01)*

(21) Numéro de dépôt: **09160012.2**

(22) Date de dépôt: **12.05.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **13.06.2008 FR 0853913**

(71) Demandeur: **PEUGEOT CITROËN AUTOMOBILES S.A.**
**78140 Vélizy Villacoublay (FR)**

(72) Inventeur: **Crehan, Gabriel**
**75019 Paris (FR)**

(54) **Dispositif et procédé pour surveiller l'intégrité d'une structure céramique de filtre à particules**

(57) L'invention concerne un dispositif pour surveiller l'intégrité d'une structure céramique d'un filtre à particules disposé sur une ligne d'échappement de moteur à combustion interne, le dispositif comportant des moyens de détermination d'une propriété physique de la structure céramique et des moyens de calcul qui déduisent de ladite détermination un état d'intégrité de la structure céramique, **caractérisé en ce que** la propriété physique déterminée est une propriété électrique de la structure céramique.

L'invention a aussi pour objet un procédé de diagnostic d'un dysfonctionnement d'une structure céramique.

**Figure 2**

EP 2 133 523 A1

**Description**

**Domaine technique de l'invention**

La présente invention se rapporte au domaine des filtres à particules utilisés dans une ligne d'échappement d'un moteur pour l'élimination des particules.

L'invention concerne plus particulièrement un dispositif et un procédé de détection des fissurations de la structure interne en céramique d'un filtre à particules.

**Arrière plan technologique**

Les polluants issus de la combustion d'un moteur Diesel ou essence sont majoritairement les hydrocarbures imbrûlés (HC), les oxydes d'azote (monoxyde d'azote NO et dioxyde d'azote $NO_2$), les oxydes de carbone (monoxyde de carbone $CO_2$ et dioxyde de carbone $CO_2$), et dans le cas des moteur Diesel et des moteurs à injection directe essence, des particules de suies.

Afin de respecter les normes environnementales internationales, la maîtrise des émissions de HC, de CO, de NOx et de particules est nécessaire et des technologies de post-traitement des gaz d'échappement sont indispensables.

Le post-traitement des particules de suies peut être réalisé par l'introduction d'un filtre à particules dans la ligne d'échappement du moteur à combustion interne. Les filtres à particules employés dans le domaine automobile comportent le plus souvent des matrices en céramique intégrant de nombreux canaux parallèles. Durant le fonctionnement du moteur à combustion interne, le filtre à particules est soumis à une succession de phase de filtration, pendant laquelle les particules de suies contenues dans les gaz d'échappement se déposent et s'accumulent dans le filtre à particules, et de phase de régénération pour éliminer les suies par combustion et conserver ainsi sa pleine efficacité.

Lors des phases de régénération, les particules de suies sont brûlées à l'intérieur de la structure en céramique du filtre à particules qui subit alors des gradients de température importants. De tels gradients de température soumettent le filtre à particules à de fortes contraintes thermiques et mécaniques qui peuvent provoquer des fissurations dans la structure céramique du filtre. Ces fissurations sont susceptibles d'entraîner une perte des capacités de filtration et un risque que le filtre à particules laisse échapper des particules dans l'atmosphère des particules de suies nocives pour la santé et qu'il ne soit plus conforme à la réglementation anti-pollution en vigueur.

Il est donc essentiel de connaître l'état d'intégrité du filtre à particules, c'est-à-dire son niveau de dégradation, et de pouvoir déduire s'il est ou non défectueux.

Une solution connue pour diagnostiquer l'état d'endommagement d'un filtre à particules est d'utiliser un capteur de pression différentielle chargé de mesurer la perte de charge c'est-à-dire l'écart de pression entre les deux cotés du filtre à particules, toute fissuration du filtre entrainant une variation de la perte de charge. Cette technique a cependant pour premier inconvénient d'être sensible non seulement à la présence de fissures mais aussi à l'accumulation des suies dans le filtre, accumulation qui peut compenser l'effet des fissures sur la perte de charge. Ainsi cette solution technique ne permet pas de mesurer le seul endommagement du filtre à particules. Cette technique a pour second inconvénient de ne pas avoir une résolution suffisante pour pouvoir distinguer des états de dégradation plus ou moins important de la structure céramique du filtre à particules. En effet, en raison du biais possible sur la perte de charge dû à l'accumulation des suies dans le filtre, seul une variation importante de la perte de charge entre les deux cotés du filtre ne laisse aucun doute d'interprétation sur l'état de dégradation du filtre.

L'invention a pour but de pallier l'inconvénient du procédé de diagnostic selon l'art antérieur en proposant un nouveau procédé qui soit apte, d'une part à mesurer le seul endommagement du filtre, indépendamment de son encrassement, et d'autre part à faire la distinction entre des niveaux de dégradations plus ou moins importants du filtre.

L'invention concerne donc un dispositif pour surveiller l'intégrité d'une structure céramique d'un filtre à particules disposé sur une ligne d'échappement de moteur à combustion interne, le dispositif comportant des moyens de détermination d'une propriété physique de la structure céramique et des moyens de calcul qui déduisent de ladite détermination un état d'intégrité de la structure céramique, caractérisé en ce que la propriété physique déterminée est une propriété électrique de la structure céramique.

En effet il est apparu que les propriétés électriques de la structure céramique d'un filtre à particules se trouvent principalement modifiées par les fissurations.

Par ailleurs, l'invention peut comporter l'une ou plusieurs des caractéristiques suivantes :

- la propriété électrique ne concerne qu'une partie de la structure céramique.
- la partie de la structure céramique dont la propriété électrique est déterminée s'étend selon un axe longitudinal de ladite structure, dans la zone centrale de la structure céramique.
- la propriété électrique de la structure céramique déterminée est la résistance électrique.
- le dispositif comporte des moyens de mesure de température pour mesurer une température du filtre à particules, afin de prendre en compte ladite température dans le calcul de l'état d'intégrité de la structure céramique.

- les moyens de mesure de température comprennent une sonde de température.
- la sonde de température est disposée sur la ligne d'échappement, en amont de la structure céramique.
- les moyens de mesure de température comprennent un modèle numérique d'estimation de la température du filtre à particules.
- la résistance électrique est déduite de la mesure d'une tension dans un circuit électrique en pont.
- les moyens de calcul comprennent une cartographie de l'état d'intégrité de la structure céramique en fonction de la tension dans le circuit électrique en pont et de la température du filtre à particules.
- le circuit électrique en pont est un pont de Wheatstone.
- les moyens de détermination comportent une sonde de tension pour mesurer la tension entre deux points d'une diagonale du pont de Wheatstone.

Par ailleurs, l'invention à aussi pour objet un procédé de diagnostic d'un dysfonctionnement d'une structure céramique d'un filtre à particules disposé sur une ligne d'échappement de moteur à combustion interne et comportant un dispositif pour surveiller l'intégrité de la structure céramique comprenant les étapes suivantes :

- la mesure d'une température du filtre à particules,
- la détermination d'une résistance électrique de la structure céramique,
- la détermination d'un niveau de dégradation de la structure céramique à partir de la température du filtre à particules et de la résistance électrique de la structure céramique,
- l'établissement d'un diagnostic de dysfonctionnement de la structure céramique sur la base d'une comparaison entre l'état d'intégrité de la structure céramique et un état d'intégrité critique prédéterminé.

**Brève description des dessins**

D'autres particularités et avantages apparaîtront à la lecture de la description ci-après d'un mode particulier de réalisation, non limitatif de l'invention, faite en référence aux figures dans lesquelles :

- La figure 1 est une représentation schématique d'un pont de Wheatstone.
- La figure 2 est une représentation schématique d'une ligne d'échappement pour moteur à combustion interne comprenant un dispositif selon l'invention pour surveiller l'intégrité d'une structure céramique d'un filtre à particules.
- La figure 3 présente un exemple de courbe de calibration permettant de déterminer le niveau de dégradation de la structure céramique d'un filtre à particules à partir de la mesure de la résistance électrique de la structure céramique et de la température du filtre à particules.

**Description détaillée**

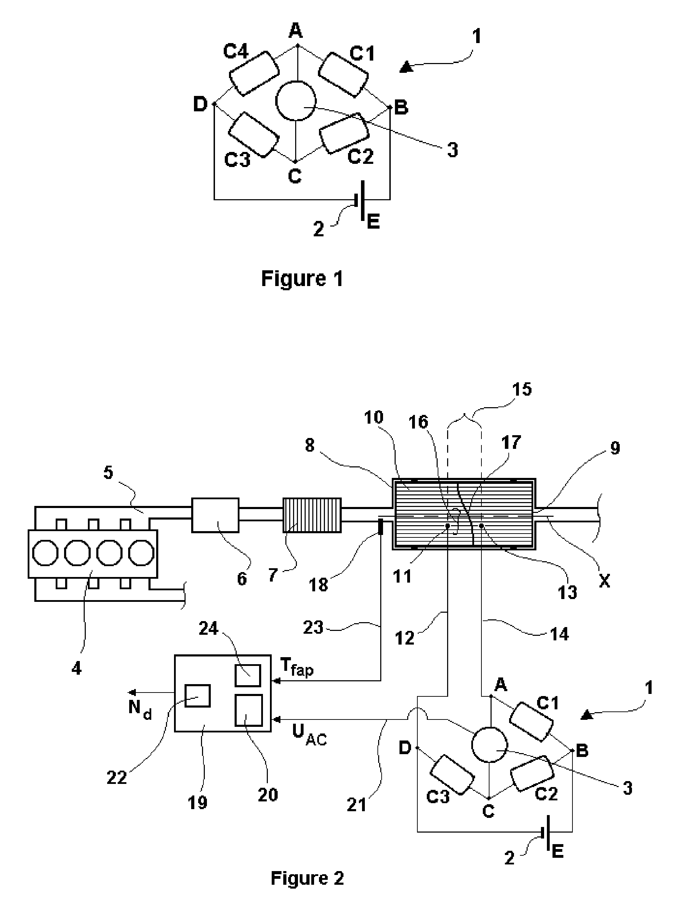

La figure 1 présente un circuit électrique en pont de Wheatstone 1 reliant quatre conducteurs ohmiques C1, C2, C3, C4 de résistance électrique respective R1, R2, R3, R4, selon un quadrilatère ABCD. Les points diagonalement opposés B et D sont connectés à une source de courant 2 ayant une tension d'alimentation E et les points diagonalement opposés A et C sont connectés à une sonde de tension 3, tel qu'un voltmètre sensible, pour mesurer une différence de potentiel, $U_{AC}$ entre les points A et C.

Dans le circuit électrique en pont de Wheatstone 1 décrit en figure 1, si la résistance électrique R4 du conducteur ohmique C4 est la résistance inconnue à mesurer et R1, R2, R3 sont les résistances connues, non ajustables, des conducteurs ohmiques respectifs C1, C2, et C3. La différence de potentiel, $U_{AC}$, relevée par la sonde de tension 3 entre les points A et C est utilisée pour déduire la valeur de la résistance R4 du conducteur ohmique C4, à partir de la relation suivante, qui donne l'équivalent Thévenin du circuit entre les points A et C :

$$U_{AC} = E\left(\frac{R_1}{R_4 + R_1} - \frac{R_2}{R_3 + R_2}\right) \qquad (1)$$

Si R1, R2, R3, ainsi que la différence de potentiel, $U_{AC}$, entre les points A et C, sont connues avec précision, alors la valeur de la résistance R4 peut être mesurée avec précision.

Alternativement, dans une variante de conception de pont de Wheatstone, non décrite ici, pour déterminer la résistance électrique R4 du conducteur ohmique C4, R1, et R3 sont des résistances connues non ajustables tandis que, dans cette variante, R2 est une résistance connue et ajustable. Dans ce cas, quand le pont de Wheatstone est dit équilibré, le rapport (R2/R1) est égal au rapport (R4/R3), et la différence de potentiel, $U_{AC}$, entre les points A et C est nulle. Ainsi, afin de déterminer la valeur de la résistance R4, la résistance R2 est ajustée jusqu'à ce que la différence de potentiel entre les points A et C soit nulle. En pratique toutefois, il est généralement plus rapide de lire une différence de potentiel que d'ajuster une valeur de résistance.

Sur la figure 2 est représenté un moteur à combustion interne 4, de type Diesel ou à allumage par compression pour véhicule automobile. Bien évidemment, l'invention n'est pas limitée à ce type de moteur et peut s'appliquer également aux moteurs à allumage commandé et notamment à ceux fonctionnant par injection directe. Le moteur à combustion interne 4 est doté d'une ligne d'échappement 5 par laquelle sont évacués les gaz d'échappement produits dans le moteur 4.

Les gaz d'échappement sont traités en passant successivement par un catalyseur d'oxydation 6, par un catalyseur deNOx 7, puis par un filtre à particules 8. Le catalyseur d'oxydation 6 permet l'élimination des hydrocarbures imbrûlés HC, du monoxyde de carbone CO et l'oxydation d'une partie des oxydes d'azote NO en $NO_2$. Le catalyseur deNOx 7 permet la réduction des oxydes d'azote $NO_x$ présents dans les gaz d'échappement. Le filtre à particules 8 contient une structure en céramique 9 dont la forme s'étend sur un axe longitudinal X intégrant de nombreux canaux parallèles 10 dans lesquels les particules de suies contenues dans les gaz d'échappement se déposent et s'accumulent. Le matériau de la structure céramique 9 est par exemple de la Cordiérite ou du carbure de silicium, SiC.

La présence du catalyseur d'oxydation 6 et du catalyseur DeNOx 7 n'est pas obligatoire pour la réalisation de l'invention. De même d'autres organes de dépollution non représentés sur la figure 2 tels qu'un second catalyseur d'oxydation ou un catalyseur SCR permettant la réduction des oxydes d'azote $NO_x$ présents dans les gaz d'échappement, par réaction catalytique sélective entre les $NO_x$ et un agent réducteur peuvent compléter la ligne d'échappement, pour améliorer le traitement antipollution des gaz d'échappement sans modifier la portée de l'invention décrite ici.

Le dispositif comprend, par ailleurs, un pont de Wheatstone 1 reliant quatre conducteurs ohmiques selon un quadrilatère ABCD. Plus précisément, un premier conducteur ohmique C1, de valeur de résistance électrique R1, est connectée entre les points A et B du quadrilatère, un second conducteur ohmique C2, de valeur de résistance électrique R2, est connectée entre les points B et C, un troisième conducteur ohmique C3, de valeur de résistance électrique R3, est connectée entre les points C et D, la structure céramique 9 du filtre à particules 8 forme le quatrième conducteur ohmique du pont de Wheatstone 1.

Par ailleurs, les points diagonalement opposés B et D sont connectés à une source de courant 2 ayant une tension d'alimentation E et les points diagonalement opposés A et C sont connectés à une sonde de tension 3, tel qu'un voltmètre sensible, pour mesurer une différence de potentiel, $U_{AC}$ entre les points A et C formant une diagonale du pont de Wheatstone 1.

Un premier point de contact électrique 11 situé dans la structure de la céramique 9 est relié au point D du pont de Wheatstone 1 par une connexion électrique 12 tandis qu'un second point de contact électrique 13 situé sur la structure de la céramique 9 est relié au point A du pont de Wheatstone 1 par une connexion électrique 14.

La structure céramique 9 du filtre à particules 8 est reliée en série à la branche AD du pont de Wheatstone 1 par des points de contact électriques 11 et 13 solidaires de ladite structure céramique.

Les points de contact électrique 11 et 13 sont disposés de façon à délimiter une tranche 15 de la structure céramique 9 qui s'étend selon l'axe longitudinale X de ladite structure , dans la zone centrale de la structure céramique. Cette tranche 15 représente la partie de la structure céramique 9, dont l'intégrité, c'est à dire le niveau de dégradation notamment dû à des fissurations, est à surveiller. La tranche 15 de la structure céramique 9 à une résistance électrique, Rfap. L'intégrité de la structure céramique 9 du filtre à particules 8 est connue par la mesure de la résistance électrique, Rfap. En effet, sous l'effet de contraintes thermomécaniques subies par la structure céramique 9 pendant par exemple une phase de régénération du filtre à particules 8, dès qu'une amorce de fissure 16 ou qu'une fissure ouverte 17 apparaît au sein de la tranche 15 de la structure céramique 9, cette fissuration a pour effet de modifier la valeur de sa résistance électrique, Rfap. Cette modification de résistance électrique, Rfap, entraîne au niveau du pont de Wheatstone 1, une modification de la différence de potentiel, $U_{AC}$, entre les points A et C.

Il est essentiel que les points de contact électrique 11 et 13 soient placés dans une zone sensiblement centrale de la structure céramique 9, comme le montre la figure 2. En effet, si une amorce de fissure 16 ou une fissure ouverte 17 apparaît au sein de la structure céramique 9 pendant, par exemple, une phase de régénération du filtre à particules 8, l'expérience montre que la fissuration a le plus souvent lieu dans une zone centrale de la structure céramique 9. L'épaisseur de la tranche 15 peut représenter 30% à 50% de la longueur totale de la structure céramique 9.

Les connexions électriques 12 et 14 sont intégrées en partie dans la structure céramique 9. Les des connexions électriques 12 et 14 peuvent être implantées à l'intérieur de la structure céramique 9 et rendu solidaire de ladite structure céramique avec un plâtre ou autre ciment réfractaire dans le corps de la structure céramique 9. La profondeur d'implantation des connexions électriques 12 et 14 dans la structure céramique 9, selon une direction perpendiculaire à l'axe longitudinal X, peux varier de quelques millimètres de la surface de la structure céramique 9 jusqu'à son milieu.

Dans une variante non représentée ici, les connexions électriques 12 et 14 peuvent aussi être enroulés autour de la structure céramique 9. Le principe est ici de maintenir un contact électrique excellent entre les points de contact électrique 11 et 13 et la partie des connexions électriques 12 et 14 intégrée dans la structure céramique 9, avec la structure céramique 9 elle-même, de manière à ce que les variations de différence de potentiel entre les points A et C soient dues essentiellement à une dégradation physique, due par exemple à une fissuration, dans la structure céramique 9 du filtre à particules 8 et non pas à la qualité des contacts électriques.

Le dispositif comporte une sonde de température 18 disposée sur la ligne d'échappement 5, en amont de la structure céramique 9 pour déterminer une température du filtre à particules, Tfap. En effet la résistance électrique, Rfap, de la tranche 15 de la structure céramique 9 est dépendante de sa température. La connaissance de la température permet de connaitre la part de la température de celle d'une dégradation physique telle qu'une fissuration de la structure céramique 9 sur la valeur de la résistance, Rfap, de la tranche 15. La sonde de température 18 est de préférence un thermocouple, qui représente une solution technique économique pour déterminer une température. Le choix technique décrit ici est d'implanter la sonde de température 18 au plus près du filtre à particules 8 et donc de la structure céramique 9, de mesurer une température des gaz d'échappement et de faire l'hypothèse que cette température des gaz d'échappement mesurée est sensiblement représentative de la température du filtre à particules 8 pour des conditions de fonctionnement moteur où celui-ci déjà chaud de plusieurs centaines de degrés comme par exemple lors d'une phase de régénération.

La figure 2 présente la sonde de température 18 implantée en amont de la ligne d'échappement 5, mais tout autre lieu d'implantation sur la ligne d'échappement 5 ou dans le filtre à particules 8 permettant d'obtenir une température la plus représentative possible de la température de la structure de la céramique 9 est une variante acceptable de ce mode de réalisation.

Une autre variante non représentée ici consiste à utiliser un modèle numérique d'estimation de la température du filtre à particules 8.

Par ailleurs, le dispositif comprend un moyen de calcul 19 tel qu'un calculateur électronique. Le calculateur 19 comprend un moyen de détermination 20 de la valeur de la résistance électrique, Rfap, de la tranche 15 de la structure céramique 9. Le calculateur 19 est connecté à la sonde de tension 3 par une connexion 21. La sonde 3 mesure la différence de potentiel, $U_{AC}$, entre les points A et C, et la valeur de cette tension est communiquée au calculateur 19 qui peut, avec le moyen de détermination 20 calculer analytiquement une valeur de la résistance électrique, Rfap, de la tranche 15 de structure céramique 9. Sur la base de la relation (1), l'expression de Rfap est la suivante :

$$R_{fap} = R_1 \left( \frac{1}{\left( \dfrac{U_{ac}}{E} + \dfrac{R_2}{R_3 + R_2} \right)} - 1 \right) \qquad (2)$$

Le calculateur 19 comprend aussi un moyen de détermination 22 d'un niveau de dégradation, Nd, de la structure céramique 9 à partir de valeur de la résistance électrique, Rfap, de la tranche 15 de la structure céramique 9 et de la température, Tfap, du filtre à particules 8. Le calculateur 19 est relié à la sonde de température 18 par une connexion 23. De plus, le calculateur 19 comprend une cartographie 24 mise en mémoire des niveaux de dégradation de la structure céramique 9 du filtre à particules 8 en fonction de la valeur de la résistance électrique, Rfap, et de la température, Tfap, du filtre à particules 8. Une telle cartographie 24 est déterminée, par exemple, à partir de courbes de calibration obtenues par des essais sur banc moteur ou par des calculs de modélisation.

La résistance électrique, Rfap, étant déterminée par la mesure de la différence de potentiel, $U_{AC}$, entre les points A et C du pont de Wheatstone 1, le niveau de dégradation Nd de la structure céramique 9 du filtre à particules 8 peut aussi s'exprimer en fonction de la valeur de la tension, $U_{AC}$, entre les points A et C du pont de Wheatstone 1, et de la température, Tfap, du filtre à particules 8.

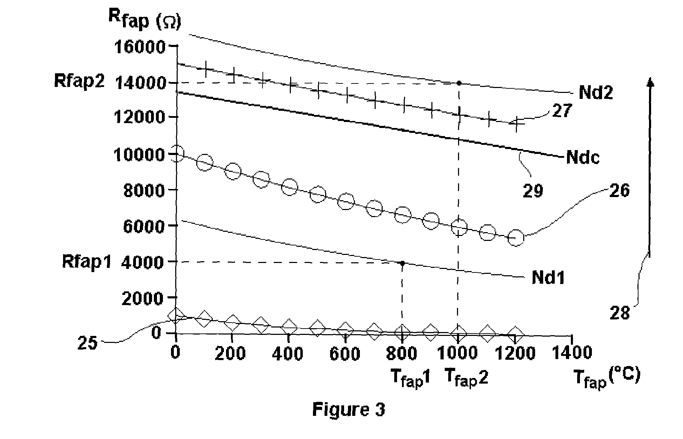

La figure 3 présente plus précisément un exemple de courbes de calibration donnant, pour trois états définis de dégradation de la structure céramique 9, un profil d'évolution de la résistance électrique, Rfap, de la structure céramique 9 en fonction de la température Tfap, du filtre à particules 8, à niveau de dégradation, Nd, de la structure céramique 9 constant.

D'une manière générale, la résistance électrique des matériaux varie avec la température donc la connaissance de la température Tfap, du filtre à particules 8 est ici utile pour s'affranchir de l'effet de la température sur la détermination du niveau de dégradation, Nd, de la structure céramique 9.

Cependant, la variation de la résistance électrique d'un matériau est plus ou moins importante en fonction de la température. Contrairement au carbure de silicium qui est plutôt conducteur, la résistance électrique ne varie pas beaucoup en fonction de la température pour des matériaux céramiques isolants tels que la cordiérite. Pour cette raison, on peut considérer que pour les matériaux qui sont de très mauvais conducteurs, l'effet de température sur la détermination du niveau de dégradation, Nd, de la structure céramique 9 est négligeable et envisager, dans une variante non décrite ici, de ne pas utiliser de mesure de température.

Une première courbe de calibration 25 montre un profil de résistance électrique, Rfap, pour un état de structure céramique 9 normal, sans dégradation. Une seconde courbe de calibration 26 montre un profil de résistance électrique, Rfap, pour un état de structure céramique 9 légèrement dégradé, c'est-à-dire par exemple, avec des fissures modestes 16, non ouvertes. Une troisième courbe de calibration 27 montre un profil de résistance électrique, Rfap, pour un état de structure céramique 9 très dégradé, c'est-à-dire, par exemple, avec des fissures ouvertes 17.

En remarque générale, on note que, comme le résume la flèche 28, une augmentation de la résistance électrique, Rfap, de la tranche 15 de la structure céramique 9 indique un accroissement de son niveau de dégradation. En effet, un ordre de grandeur de la résistivité d'un matériau céramique traditionnellement utilisé pour les structures de filtre à particules tel que le carbure de silicium est de $10^3$ $\Omega$.m. La résistivité de l'air est, quant à elle, supérieure à $10^9$ $\Omega$.m. La fissuration entraine des discontinuités de la structure céramique et en cas de fissure ouverte 17 de la structure céramique entre les deux points de mesure 11 et 13, la résistance électrique Rfap augmentera de plusieurs ordres de grandeur.

Les profils de résistance électrique, Rfap, de la structure céramique 9 présentés sur la figure 3, en fonction de la température, Tfap, du filtre à particules 8, à niveau de dégradation constant sont indicatifs et peuvent varier selon l'application en fonction de paramètres pouvant influencer la valeur de la résistance électrique, Rfap, tels que par exemple la nature du matériau céramique utilisé, l'épaisseur de la tranche 15 délimitée par les points de contact 11 et 13.

Par ailleurs, pour s'affranchir d'une modification de la résistance électrique, Rfap, de la structure céramique 9, par la présence par exemple de suies, ou encore de résidus de régénération, il est fortement conseillé, mais pas obligatoire, de faire des mesures de la résistance électrique après une phase de régénération.

Avantageusement un profil critique 29 défini, sur le graphe de la figure 3, un niveau de dégradation critique, Ndc, au-delà duquel on considère que la structure céramique 9 est trop abimée et que sa capacité de filtration n'est plus conforme à nos exigences comme par exemple la réglementation anti-pollution en vigueur. Le profil critique 29 peut alors être utilisé comme seuil d'alerte dans le cas d'un diagnostic d'un dysfonctionnement de la structure céramique 9 du filtre à particules 8.

A partir des valeurs de la résistance électrique Rfap et de la température, Tfap, du filtre à particules 8, le moyen de détermination 22 de l'intégrité de la structure céramique 9 détermine à l'aide de la cartographie 24 un niveau de dégradation, Nd, par exemple par des méthodes numériques d'interpolation, afin de pouvoir établir un diagnostic de dysfonctionnement de la structure céramique 9 sur la base d'une comparaison entre le niveau de dégradation, Nd, et le niveau de dégradation critique, Ndc, prédéterminé.

Afin de mieux comprendre ce dernier point, nous présentons à titre d'exemple deux cas de figure :

Dans un premier cas illustré sur la figure 3, la différence de potentiel $U_{AC}$ mesurée entre les points A et C du pont de Wheatstone 1 conduit à déterminer une résistance électrique Rfap1 équivalente à 4000 Ohms. La sonde de température 3 donne par ailleurs une température, Tfap1, du filtre à particules 8 de 800 °C. A partir ces valeurs de résistance électrique Rfap1 et de température Tfap1, le graphe illustré en figure 3 permet de déterminer un niveau de dégradation Nd1 qui se trouve compris entre la première courbe de calibration 25 et la seconde courbe de calibration 26, ce qui indique un état de dégradation plutôt faible. Dans ce cas, on considère que la capacité de filtration de la structure céramique 9 est toujours conforme à la réglementation anti-pollution et qu'aucune action n'est à envisager.

Dans un second cas illustré sur la figure 3, la différence de potentiel $U_{AC}$ entre les points A et C du pont de Wheatstone 1 conduit à déterminer une résistance électrique Rfap2 équivalente à 14000 Ohms. La sonde de température 3 donne par ailleurs une température, Tfap2, de filtre à particules 8 de 1000 °C. A partir de ces valeurs de résistance électrique Rfap2 et de température Tfap2, le graphe illustré en figure 3 permet de déterminer un niveau de dégradation Nd2 qui se trouve situé au-delà de la troisième courbe de calibration 27, ce qui indique un état de dégradation élevé. De plus, dans ce deuxième exemple, le niveau de dégradation Nd2 est supérieur au niveau de dégradation critique Ndc défini par le profil critique 29. Dans ce cas, on considère que la capacité de filtration de la structure céramique 9 n'est plus conforme à la réglementation anti-pollution et une action de maintenance, est à envisager.

Ainsi, les deux exemples précédents montrent que le dispositif proposé par l'invention est susceptible de faire la distinction entre différents niveaux de dégradation de la structure céramique 9 et un développement avantageux de l'invention prévoit qu'un diagnostic de dysfonctionnement de la structure céramique 9 est établi si le niveau de dégradation, Nd, est supérieur au niveau de dégradation critique, Ndc.

Ce mode de réalisation décrit en figure 2 n'est aucunement limitatif. Selon une variante les points de contacts 11 et 13 sont disposés solidaires de la structure céramique de façon à délimiter une tranche 15 qui comprend sensiblement toute la structure céramique. Ainsi l'invention est susceptible de pouvoir détecter l'apparition de fissurations en un endroit quelconque au sein de la structure céramique 9.

Selon une autre variante les points de contacts 11 et 13 sont disposés solidaires de la structure céramique 9 de façon à délimiter une tranche 15 qui comprend une partie quelconque de la structure céramique 9, afin de surveiller l'intégrité d'une zone d'intérêt de la structure céramique 9. Les points de contacts peuvent aussi être multiples et disposés de façon à délimiter plusieurs tranches consécutives de la structure céramique 9, ces points de contacts pouvant être connecté successivement au pont de Wheatstone 1 par un système de commutation approprié, ceci afin d'avoir une résolution spatiale de l'intégrité de la structure céramique 9.

De plus, l'invention ne se limite pas à un type particulier de matériau céramique utilisé pour les filtres à particules. A titre indicatif, d'autres matériaux céramiques pouvant être utilisés sont : $CeO_2$, $ZrO_2$, $Al_2O_3$. L'invention se prête aussi à surveiller l'intégrité de structures céramiques catalysées de filtres à particules, c'est-à-dire des structures céramiques comprenant un dépôt catalytique à la surface du matériau céramique.

Le circuit électrique en pont de Wheatstone 1 tel que décrit en figure 1 n'est pas limitatif. En effet il est un agencement particulier parmi les variantes de circuits électriques en pont, ces circuits électriques en pont étant eux-mêmes un moyen particulier parmi les différents moyens de mesure de résistance électrique.

De plus, selon l'invention, la résistance électrique Rfap est une propriété électrique dont la détermination est moyen de déduire un état de dégradation Nd de la structure céramique 9, toutefois la détermination d'autres propriétés électriques dont la valeur serait dépendante de l'état de fissuration de la structure céramique 9 tels que par exemple une capacité électrique, une impédance ou une permissivité électrique pourrait également convenir.

## Revendications

1. Dispositif pour surveiller l'intégrité d'une structure céramique (9) d'un filtre à particules (8) disposé sur une ligne d'échappement (5) de moteur à combustion interne (4), le dispositif comportant des moyens de détermination d'une propriété physique de la structure céramique (9) et des moyens de calcul (19) qui déduisent de ladite détermination un état d'intégrité (Nd) de la structure céramique (9), **caractérisé en ce que** la propriété physique déterminée est une propriété électrique de la structure céramique (9).

2. Dispositif pour surveiller l'intégrité d'une structure céramique (9) d'un filtre à particules (8) selon la revendication 1, **caractérisé en ce que** la propriété électrique ne concerne qu'une partie de la structure céramique (9).

3. Dispositif pour surveiller l'intégrité d'une structure céramique (9) d'un filtre à particules (8) selon la revendication 2, **caractérisé en ce que** la partie de la structure céramique (9) dont la propriété électrique est déterminée s'étend selon un axe longitudinal (X) de ladite structure, dans la zone centrale de la structure céramique (9).

4. Dispositif pour surveiller l'intégrité d'une structure céramique (9) d'un filtre à particules (8) selon la revendication 1 à 3, **caractérisé en ce que** la propriété électrique de la structure céramique (9) déterminée est la résistance électrique (Rfap).

5. Dispositif pour surveiller l'intégrité d'une structure céramique (9) d'un filtre à particules (8) selon la revendication 4, **caractérisé en ce que** ledit dispositif comporte des moyens de mesure de température pour mesurer une température (Tfap) du filtre à particules (8), afin de prendre en compte ladite température dans le calcul de l'état d'intégrité (Nd) de la structure céramique (9).

6. Dispositif pour surveiller l'intégrité d'une structure céramique (9) d'un filtre à particules (8) selon la revendication 5 **caractérisé en ce que** lesdits moyens de mesure de température comprennent une sonde de température (18).

7. Dispositif pour surveiller l'intégrité d'une structure céramique (9) d'un filtre à particules (8) selon la revendication 6, **caractérisé en ce que** la sonde de température (18) est disposée sur la ligne d'échappement (5), en amont de la structure céramique (9).

8. Dispositif pour surveiller l'intégrité d'une structure céramique (9) d'un filtre à particules (8) selon la revendication 5, **caractérisé en ce que** lesdits moyens de mesure de température comprennent un modèle numérique d'estimation de la température (Tfap) du filtre à particules (8).

9. Dispositif pour surveiller l'intégrité d'une structure céramique (9) d'un filtre à particules (8) selon les revendications 4 à 8, **caractérisé en** ladite résistance électrique (Rfap) est déduite de la mesure d'une tension ($U_{AC}$) dans un circuit électrique en pont.

10. Dispositif pour surveiller l'intégrité d'une structure céramique (9) d'un filtre à particules (8) selon les revendications 5 à 9, **caractérisé en ce que** les moyens de calcul (19) comprennent une cartographie (24) de l'état d'intégrité (Nd) de la structure céramique (9) en fonction de la tension ($U_{AC}$) dans le circuit électrique en pont et de la température (Tfap) du filtre à particules (8).

11. Dispositif pour surveiller l'intégrité d'une structure céramique (9) d'un filtre à particules (8) selon l'une quelconque des revendications 9 ou 10, **caractérisé en ce que** le circuit électrique en pont est un pont de Wheatstone (1).

12. Dispositif pour surveiller l'intégrité d'une structure céramique (9) d'un filtre à particules (8) selon la revendication 11, **caractérisé en ce que** les moyens de détermination comportent une sonde de tension (3) pour mesurer la tension ($U_{AC}$) entre deux points d'une diagonale (AC) du pont de Wheatstone (1).

13. Procédé de diagnostic d'un dysfonctionnement d'une structure céramique (9) d'un filtre à particules (8) disposé sur une ligne d'échappement (5) de moteur à combustion interne (4) et comportant un dispositif pour surveiller l'intégrité de la structure céramique (9) selon les revendications 1 à 12, **caractérisé en ce qu'**il comprend les étapes suivantes :

    - la mesure d'une température (Tfap) du filtre à particules (8),
    - la détermination d'une résistance électrique (Rfap) de la structure céramique (9),
    - la détermination d'un état d'intégrité (Nd) de la structure céramique (9) à partir de la température (Tfap) du filtre à particules (8) et de la résistance électrique (Rfap) de la structure céramique (9),
    - l'établissement d'un diagnostic de dysfonctionnement de la structure céramique (9) sur la base d'une comparaison entre l'état d'intégrité (Nd) de la structure céramique (9) et un état d'intégrité critique (Ndc) prédéterminé.

EP 2 133 523 A1

Figure 1

Figure 2

Figure 3

Europäisches
Patentamt

European
Patent Office

Office européen
des brevets

**RAPPORT DE RECHERCHE EUROPEENNE**

Numéro de la demande

EP 09 16 0012

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | JP 05 098941 A (NIPPON DENSO CO) 20 avril 1993 (1993-04-20) * abrégé; figures * ----- | 1-4,9-13 | INV. F01N3/02 F01N11/00 |
| Y | JP 61 274748 A (TECH RES ASSOC CONDUCT INORG C) 4 décembre 1986 (1986-12-04) * abrégé * ----- | 1-4,9-13 | |
| A | JP 63 165744 A (BABCOCK HITACHI KK) 9 juillet 1988 (1988-07-09) * abrégé; figures * ----- | 1-13 | |
| A | DE 43 38 547 A1 (BOSCH GMBH ROBERT [DE]) 18 mai 1995 (1995-05-18) * le document en entier * ----- | 5-8 | |
| A | EP 0 936 348 A (DAIMLER CHRYSLER AG [DE]) 18 août 1999 (1999-08-18) * abrégé; figure 12 * ----- | 9-12 | |

DOMAINES TECHNIQUES
RECHERCHES (IPC)

F01N

Le présent rapport a été établi pour toutes les revendications

| Lieu de la recherche | Date d'achèvement de la recherche | Examinateur |
|---|---|---|
| Munich | 16 septembre 2009 | Blanc, Sébastien |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 16 0012

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-09-2009

| Document brevet cité au rapport de recherche | | Date de publication | Membre(s) de la famille de brevet(s) | | Date de publication |
|---|---|---|---|---|---|
| JP 5098941 | A | 20-04-1993 | AUCUN | | |
| JP 61274748 | A | 04-12-1986 | JP | 1889613 C | 07-12-1994 |
| | | | JP | 6011400 B | 16-02-1994 |
| JP 63165744 | A | 09-07-1988 | AUCUN | | |
| DE 4338547 | A1 | 18-05-1995 | JP | 7166844 A | 27-06-1995 |
| EP 0936348 | A | 18-08-1999 | AT | 250181 T | 15-10-2003 |
| | | | DE | 19805928 A1 | 02-09-1999 |
| | | | ES | 2207038 T3 | 16-05-2004 |
| | | | JP | 3185023 B2 | 09-07-2001 |
| | | | JP | 11326255 A | 26-11-1999 |
| | | | US | 6240722 B1 | 05-06-2001 |

EPO FORM P0460

Pour tout renseignement concernant cette annexe : voir Journal Officiel de l'Office européen des brevets, No.12/82